# EUROPÄISCHE PATENTSCHRIFT

(11) **EP 0 399 272 B1**
(45) Veröffentlichungstag und Bekanntmachung des Hinweises auf die Patenterteilung: **05.01.1994**
(21) Anmeldenummer: 90108546.4
(22) Anmeldetag: 07.05.1990
(51) Int. Cl.: C08J 5/18, B29C 67/04, C08J 7/04

(54) **Verfahren zur Herstellung von weichen, elastischen Polyurethan-Folien**
Process for preparing soft elastic polyurethane foils
Procédé pour la préparation des feuilles de polyuréthane élastique souple

(30) Priorität: 24.05.1989 DE 3916874
(43) Veröffentlichungstag der Anmeldung: 28.11.1990
(73) Patentinhaber: BASF Aktiengesellschaft, 67063 Ludwigshafen (DE)
(72) Erfinder: Zeitler, Gerhard, Dr., D-6717 Hessheim (DE); Lehr, Gerhard, D-6721 Schwegenheim (DE)

(56) Entgegenhaltungen:
- DE-A- 1 554 784
- DE-B- 2 350 765
- DE-C- 2 660 104
- GB-A- 1 121 770

## Beschreibung

Gegenstand der Erfindung ist ein Verfahren zur Herstellung von weichen, elastischen Polyurethan-Folien durch Sintern von pulverförmigen thermoplastischen Polyurethanen - im folgenden auch abgekürzt TPU genannt - mit einem Schmelzindex bei 190°C und einem Auflagegewicht von 212 N von 50 bis 350 und einer Shore-A-Härte von 80 bis 98, vorzugsweise unter Mitverwendung von 0,05 bis 1 Gew.-Teilen eines feinpulverisierten Aluminiumoxids und/oder Kieselgels pro 100 Gew.-Teilen des TPU mit Hilfe eines temperierten Formwerkzeugs.

Die Herstellung von PU-Folien durch Gießen aus flüssigen PU-Formulierungen oder durch Extrusion von TPU ist bekannt und wird z.B. beschrieben im Kunststoff-Handbuch "Polyurethane", Band 7, 2. Auflage, Seite 469 (herausgegeben von Dr. G. Oertel; Carl Hanser Verlag, München, Wien, 1983).

Aus Flüssigformulierungen werden entweder Blöcke gegossen, aus denen Folien gespalten werden, oder die Folien werden im Schleuderverfahren direkt hergestellt. Folien aus TPU in Dicken von 0,03 bis 0,3 mm werden üblicherweise im Blasverfahren, dickere Folien, z.B. bis zu ungefähr 3 mm durch Breitschlitzextrusion hergestellt. In der genannten Monographie nicht erwähnt wird die Herstellung von PU-Folien aus TPU durch Sintern.

In DE-A- 23 50 765 wird ein Verfahren zur Herstellung von Folien aus Polyurethanen bzw. Polyurethanharnstoffen beschrieben. Hierbei werden pulverförmige Polyurethane bzw. Polyurethanharnstoffe trocken auf einen Trennträger oder ein flexibles Substrat aufgetragen und danach durch Hitze gesintert und gegebenenfalls anschließend kalandriert.

DE-A- 26 60 104 beschreibt ein Verfahren zur Herstellung von wärmeaktivierbaren Polyurethanpulvern durch Umsetzen von Polyisocyanaten mit einem emulgierten Glykol und anschließender Fällung und Abtrennung des entstehenden Polyurethanpulvers. Dieses Pulver kann unter Hitze zu Polyurethan-Folien verpreßt werden.

In beiden Fällen handelt es sich nicht um thermoplastische Polyurethane, sondern um Produkte, die bei der Temperaturbehandlung vernetzen und anschließend nicht mehr verformbar sind. Außerdem entstehen bei beiden Verfahren lediglich Flächengebilde; die Herstellung von Formteilen ist nicht möglich.

Bekannt ist ferner die Verwendung von dekorativen Kunststoff-Folien im Kraftfahrzeug-Innenraum (R. Pfriender, Kunststoffe, 76 (1986), 10, S. 960ff), wobei die Kunststoff-Formteile mit Folien beschichtet oder die Folien oder Häute mit Schaumstoffen, vorzugsweise PU-Schaumstoff hinterschäumt werden.

Bei Verwendung von PU werden die Oberflächenschichten meist aus Zweikomponenten-PU-Systemen im IMC-Verfahren (in Mould Coating) hergestellt. Nach diesem Verfahren wird das auf etwa 50°C erwärmte Formwerkzeug zuerst mit einem Trennmittel eingesprüht, danach wird der PU-Zweikomponentenlack und anschließend die PU-Trägerschicht in das offene Formwerkzeug eingebracht. Diese Fertigungstechnik zur Herstellung entsprechender Bauteile ist schwierig und wird noch kaum von Verarbeitern beherrscht (Dr. M. Wachsmann, Kunststoffberater, 10/1987, Seiten 27-28).

Nach dem Stand der Technik werden PVC/ABS-Folien üblicherweise nach dem Thermoform-Verfahren verformt und anschließend in einem zweiten Verfahrensschritt hinterschäumt. PVC-Folien können nach dem PVC-Powder-Slush-Verfahren hergestellt werden. Hierzu wird das Formwerkzeug in einem Ofen auf ungefähr 250°C erhitzt, danach das pulverförmige PVC gleichmäßig darauf verteilt und zum Ausgelieren der PVC-Haut das Formwerkzeug erneut im Ofen erwärmt. Nach dem Abkühlen des Formwerkzeugs, z.B. in einem Wasserbad, kann die Folie entnommen und zur Hinterschäumung eingesetzt werden. Die nach dem PVC-Powder-Slush-Verfahren hergestellten Folien sind im Vergleich zu ABS/PVC-, PU-IMC- und TPU-Folien erheblich kostengünstiger. Nachteilig an Formkörpern aus mit PU-Schaumstoffen hinterschäumten PVC-Folien ist die gegenseitige negative Beeinflussung der PVC-Folie und PU-Hinterschäumung. So diffundieren Bestandteile, wie z.B. Katalysatoren, Stabilisatoren u.a. aus dem PU-Schaumstoff in die Dekorfolie und umgekehrt erfolgt eine Weichmachermigration von der PVC-Folie in den PU-Schaumstoff. Durch diese Migrationsprozesse werden die Formkörper, z.B. durch Schwindungen oder Versprödungen, mechanisch geschädigt und verändern durch Verfärbung und Fleckenbildung ihr Aussehen (Kunststofftechnik, VDI-Verlag GmbH, Düsseldorf, 1987, "Kunststoffe als Problemlöser im Automobilbau", Seiten 141ff).

Die Aufgabe der vorliegenden Erfindung bestand darin, nach einem kostengünstigen Verfahren aus einem geeigneten Kunststoff Folien herzustellen, die mit PU-Schaumstoff-Systemen problemlos hinterschäumt werden können, ohne daß eine sich nachteilig auswirkende Wechselwirkung zwischen Deckfolie und PU-Schaumstoff eintritt. Die Deckfolien sollten zweckmäßigerweise eine hohe Lichtbeständigkeit aufweisen, die Formkörper sollten temperaturbeständig sein und im Innenraum von Verkehrsmitteln Anwendung finden.

Diese Aufgabe konnte überraschenderweise mit einem Verfahren zur Herstellung von PU-Folien durch Sintern von bestimmten TPU oder vorzugsweise TPU-Mischungen gelöst werden.

Gegenstand der Erfindung ist somit ein Verfahren zur Herstellung von weichen, elastischen PU-Folien, das dadurch gekennzeichnet ist, daß man ein pulverförmiges thermoplastisches Polyurethan oder thermoplastisches Polyurethan-Gemisch mit einem Schmelzindex bei 190°C und einem Auflagegewicht von 212 N (21,6 kp) von 50 bis 350, vorzugsweise von 200 bis 300, und einer Shore-A-Härte von 80 bis 98, vorzugsweise von 92 bis 95, mittels eines temperierten Formwerkzeuges sintert.

Die nach dem erfindungsgemäßen Verfahren hergestellten PU-Folien weisen zweckmäßigerweise eine Dicke von 0,3 bis 3 mm, vorzugsweise von 0,6 bis 1,2 mm, auf.

Gegenstand der Erfindung ist ferner die Verwendung der nach dem erfindungsgemäßen Verfahren hergestellten Polyurethan-Folien zum Beschichten von Formteilen für den Innenraum von Verkehrsmitteln, vorzugsweise Kraftfahrzeugen nach Anspruch 10.

Durch eine entsprechende Auswahl der TPU oder deren Abmischung aus einer Vielzahl von Produkten mit einem Schmelzindex und einer Härte in dem erfindungswesentlichen Bereich, z.B. TPU, hergestellt unter Verwendung von Polyester- und/oder Polyether-polyolen und aliphatischen und/oder aromatischen Diisocyanaten sowie unter Zusatz von z.B. Pigmenten, Stabilisatoren, Antioxidantien oder insbesondere Aluminiumoxid, Kieselgel oder Mischungen davon und anderen für TPU üblichen Hilfsmitteln und Zusatzstoffen, können Folien in zahlreichen Farbeinstellungen mit den unterschiedlichsten mechanischen Eigenschaften nach dem Sinterverfahren auch in relativ kleinen Stückzahlen kostengünstig hergestellt werden.

Die erfindungsgemäß verwendbaren TPU mit einem Schmelzindex bei 190°C und einem Auflagegewicht von 212 N von 50 bis 350 und einer Shore-A-Härte von 80 bis 98 entsprechen dem Stand der Technik und können hergestellt werden durch Umsetzung von
a) organischen und/oder modifizierten organischen Diisocyanaten, mit
b) Polyhydroxylverbindungen, vorzugsweise im wesentlichen linearen Polyhydroxylverbindungen mit Molekulargewichten von 500 bis 8000, insbesondere Polyalkylenglykolpolyadipaten mit 2 bis 6 C-Atomen im Alkylenrest und Molekulargewichten von 500 bis 6000 oder hydroxylgruppenhaltigen Polytetrahydrofuranen mit einem Molekulargewicht von 500 bis 8000 und
c) Diolen als Kettenverlängerungsmitteln mit Molekulargewichten von 60 bis 400, insbesondere Butandiol-1,4
in Gegenwart von
d) Katalysatoren und gegebenenfalls
e) Hilfsmitteln und/oder
f) Zusatzstoffen
bei erhöhten Temperaturen.

Zu den Aufbaukomponenten (a) bis (d) und gegebenenfalls (e) und/oder (f) ist folgendes auszuführen:
a) als organische Diisocyanate (a) kommen vorzugsweise aliphatische, cycloaliphatische und aromatische Diisocyanate in Betracht. Im einzelnen seien beispielhaft genannt: aliphatische Diisocyanate, wie Hexamethylen-diisocyanat-1,6, 2-Methyl-pentamethylen-diisocyanat-1,5, 2-Ethyl-butylen-diisocyanat-1,4 oder Mischungen aus mindestens zwei der genannten aliphatischen Diisocyanate, cycloaliphatische Diisocyanate, wie Isophoron-diisocyanat, 1,4-Cyclohexan-diisocyanat, 1-Methyl-2,4- und -2,6-cyclohexan-diisocyanat sowie die entsprechenden Isomerengemische, 4,4'-, 2,4'- und 2,2'-Dicyclohexylmethan-diisocyanat sowie die entsprechenden Isomerengemische und aromatische Diisocyanate, wie 2,4-Toluylen-diisocyanat, Gemische aus 2,4- und 2,6-Toluylen-diisocyanat, 4,4'-, 2,4'- und 2,2'-Diphenylmethan-diisocyanat, Gemische aus 2,4'- und 4,4'-Diphenylmethan-diisocyanat, urethanmodifizierte flüssige 4,4'- und/oder 2,4'-Diphenylmethan-diisocyanate, 4,4'-Diisocyanato-diphenylethan-1,2, Gemische aus 4,4'-, 2,4'- und 2,2'-Diisocyanato-diphenylethan-1,2, vorteilhafterweise solche mit einem 4,4'-Diisocyanato-diphenylethan-1,2-Gehalt von mindestens 95 Gew.% und 1,5-Naphthylen-diisocyanat. Vorzugsweise verwendet werden Diphenylmethan-diisocyanat-Isomerengemische mit einem 4,4'-Diphenylmethan-diisocyanatgehalt von größer als 96 Gew.% und insbesondere im wesentlichen reines 4,4'-Diphenylmethan-diisocyanat, Hexamethylen-diisocyanat-1,6, Isophoron-diisocyanat und 4,4'- und/oder 2,4'-Dicyclohexylmethan-diisocyanat.
   Die organischen Diisocyanate können gegebenenfalls in untergeordneten Mengen, z.B. in Mengen bis zu 3 Mol.%, vorzugsweise bis zu 1 Mol%, bezogen auf das organische Diisocyanat, durch ein tri- oder höherfunktionelles Polyisocyanat ersetzt werden, wobei dessen Mengen jedoch so begrenzt werden muß, daß noch thermoplastisch verarbeitbare Polyurethane erhalten werden. Eine größere Menge an derartigen mehr als difunktionellen Isocyanaten wird zweckmäßigerweise durch die Mitverwendung von weniger als difunktionellen Verbindungen mit reaktiven Wasserstoffatomen, ausgeglichen, so daß eine zu weitgehende chemische Vernetzung des Polyurethans vermieden wird. Beispiele für mehr als difunktionelle Isocyanate sind Mischungen aus Diphenylmethan-diisocyanaten und Polyphenyl-polymethylen-polyisocyanaten, sog. Roh-MDI sowie flüssige, mit Isocyanurat-, Harnstoff-, Biuret-, Allophanat-, Urethan- und/oder Carbodiimidgruppen modifizierte 4,4'- und/oder 2,4'-Diphenylmethan-diisocyanate.
   Als geeignete monofunktionelle Verbindungen mit reaktivem Wasserstoffatom, die auch als Molekulargewichtsregler verwendbar sind, seien z.B. genannt: Monoamine wie z.B. Butyl-, Dibutyl-, Octyl-, Stearyl-, N-Methylstearylamin, Pyrrolidon, Piperidin und Cyclohexylamin, und Monoalkohole wie z.B. Butanol, Amylalkohol, 1-Ethylhexanol, Octanol, Dodecanol, Cyclohexanol und Ethylenglykolmonoethylether.
b) Als höhermolekulare Polyhydroxylverbindungen (b) mit Molekulargewichten von 500 bis 8000 eignen sich vorzugsweise Polyetherole und insbesondere Polyesterole. In Betracht kommen jedoch auch andere hydroxylgruppenhaltige Polymere mit Ether- oder Estergruppen als Brückenglieder, beispielsweise Polyacetale, wie Polyoxymethylene und vor allem wasserunlösliche Formale, z.B. Polybutandiolformal und Polyhexandiolformal, und Polycarbonate, insbesondere solche aus Diphenylcarbonat und Hexandiol-1,6, hergestellt durch Umesterung. Die Polyhydroxylverbindungen müssen zumindest überwiegend linear, d.h. im Sinne der Isocyanatreaktion difunktionell aufgebaut sein. Die genannten Polyhydroxylverbindungen können als Einzelkomponenten oder in Form von Mischungen zur Anwendung kommen.
   Geeignete Polyetherole können nach bekannten Verfahren, beispielsweise durch anionische Polymerisation mit Alkalihydroxiden, wie Natrium- oder Kaliumhydroxid oder Alkalialkoholaten, wie Natrium-methylat, Natrium- oder Kaliumethylat oder Kaliumisopropylat als Katalysatoren und unter Zusatz mindestens eines Startermoleküls das 2 bis 3, vorzugsweise 2 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.
   Geeignete Alkylenoxide sind bevorzugt beispielsweise Tetrahydrofuran, 1,3-Propylenoxid, 1,2- bzw. 2,3-Butylenoxid und insbesondere bevorzugt Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure und/oder Glutarsäure, Alkanolamine, wie z.B. Ethanolamin, N-Alkylalkanolamine, N-Alkyl-dialkanolamine, wie z.B. N-Methyl- und N-Ethyl-diethanolamin und vorzugsweise zweiwertige, gegebenenfalls Etherbrücken gebunden enthaltende Alkohole, wie z.B. Ethandiol, Propandiol-1,2 und -1,3, Butandiol-1,4, Diethylenglykol, Pentandiol-1,5, Hexandiol-1,6, Dipropylenglykol, 2-Methylpentandiol-1,5 und 2-Ethyl-butandiol-1,4. Die Startermoleküle können einzeln oder als Gemische eingesetzt werden.
   Vorzugsweise verwendet werden Polyetherole aus 1,2-Propylenoxid und Ethylenoxid, in denen mehr als 50 %, vorzugsweise 60 bis 80 % der OH-Gruppen primäre Hydroxylgruppen sind und bei denen zumindest ein Teil des Ethylenoxids als endständiger Block angeordnet ist. Derartige Polyetherole können erhalten werden, indem man z.B. an das Startermolekül zunächst das 1,2-Propylenoxid und daran anschließend das Ethylenoxid polymerisiert oder zunächst das gesamte 1,2-Propylenoxid im Gemisch mit einem Teil des Ethylenoxids copolymerisiert und den Rest des Ethylenoxids anschließend anpolymerisiert oder schrittweise zunächst einen Teil des Ethylenoxids, dann das gesamte 1,2-Propylenoxid und dann den Rest des Ethylenoxids an das Startermolekül anpolymerisiert.
   Insbesondere geeignet sind ferner die hydroxylgruppenhaltigen Polymerisationsprodukte des Tetrahydrofurans.
   Die im wesentlichen linearen Polyetherole besitzen Molekulargewichte von 500 bis 8000, vorzugsweise 600 bis 6000 und insbesondere 800 bis 3500. Sie können sowohl einzeln als auch in Form von Mischungen untereinander zur Anwendung kommen.
   Geeignete Polyesterole können beispielsweise aus Dicarbonsäuren mit 2 bis 12, vorzugsweise 4 bis 6 Kohlenstoffatomen und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterole kann es gegebenenfalls vorteilhaft sein, anstelle der Dicarbonsäuren die entsprechenden Dicarbonsäurederivate, wie Dicarbonsäuremono- und/oder -diester mit 1 bis 4 Kohlenstoffatomen im Alkoholrest, Dicarbonsäureanhydride oder Dicarbonsäuredichloride zu verwenden. Beispiele für mehrwertige Alkohole sind Glykole mit 2 bis 10, vorzugsweise 2 bis 6 Kohlenstoffatomen, wie Ethylenglykol, Diethylenglykol, Butandiol-1,4, Pentandiol-1,5, Hexandiol-1,6, Decandiol-1,10, 2,2-Dimethylpropandiol-1,3, Propandiol-1,3 und Dipropylenglykol. Je nach den gewünschten Eigenschaften können die mehrwertigen Alkohole allein oder gegebenenfalls in Mischungen untereinander verwendet werden.
   Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von ω-Hydroxycarbonsäuren, beispielsweise ω-Hydroxycapronsäure und vorzugsweise Polymerisationsprodukte von Lactonen, beispielsweise gegebenenfalls substituierten ω-Caprolactonen.
   Als Polyesterole vorzugsweise verwendet werden Ethandiol-polyadipate, 1,4-Butandiol-polyadipate, Ethandiol-1,4-butandiol-polyadipate, 1,6-Hexandiol-neopentylglykol-polyadipate, 1,6-Hexandiol-1,4-butandiol-polyadipate und Polycaprolactone.
   Die Polyesterole besitzen Molekulargewichte von 500 bis 6000, vorzugsweise von 800 bis 3500.
c) Als Kettenverlängerungsmittel (c) mit Molekulargewichten von 60 bis 400, vorzugsweise 60 bis 300, kommen vorzugsweise aliphatische Diole mit 2 bis 12 Kohlenstoffatomen, vorzugsweise mit 2, 4 oder 6 Kohlenstoffatomen, wie z.B. Ethandiol, Hexandiol-1,6, Diethylenglykol, Dipropylenglykol und insbesondere Butandiol-1,4 in Betracht. Geeignet sind jedoch auch Diester der Terephthalsäure mit Glykolen mit 2 bis 4 Kohlenstoffatomen, wie z.B. Terephthalsäure-bis-ethylenglykol oder -butandiol-1,4 und Hydroxyalkylenether des Hydrochinons, wie z.B. 1,4-Di-(β-hydroxyethyl)-hydrochinon sowie Polytetramethylenglykole mit Molekulargewichten von 162 bis 378.
   Zur Einstellung von Härte und Schmelzindex können die Aufbaukomponenten in relativ breiten molaren Verhältnissen variiert werden, wobei die Härte und die Schmelzviskosität mit zunehmendem Gehalt an Kettenverlängerungsmittel (c) ansteigt, während der Schmelzindex abnimmt.
   Zur Herstellung der TPU werden die im wesentlichen difunktionellen Polyhydroxylverbindungen (b) und Diolen (c) vorteilhafterweise in Molverhältnissen von 1:2 bis 1:6, vorzugsweise von 1:2,5 bis 1:4 verwendet, so daß die resultierenden TPU's eine Härte nach Shore A von 80 bis 98, vorzugsweise von 82 bis 95 besitzen.
   d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, Diazabicyclo-(2,2,2)-octan und ähnliche sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,001 bis 0,1 Gew.-Teilen pro 100 Gew.-Teilen der Mischung aus Polyhydroxylverbindungen (b) und Diolen (c) eingesetzt.

Neben Katalysatoren können den Aufbaukomponenten auch Hilfsmittel (e) und/oder Zusatzstoffe (f) einverleibt werden. Genannt seien beispielsweise Gleitmittel, Inhibitoren, Stabilisatoren gegen Hydrolyse, Licht, Hitze oder Verfärbung, Flammschutzmittel, Farbstoffe, Pigmente, anorganische und/oder organische Füllstoffe.

Die Hilfsmittel (e) und/oder Zusatzstoffe (f) können hierzu in die Aufbaukomponenten oder in die Reaktionsmischung zur Herstellung der TPU eingebracht werden. Nach einer anderen Verfahrensvariante können die Hilfsmittel (e) und/oder Zusatzstoffe (f) jedoch mit dem TPU gemischt und anschließend verschmolzen werden. Die zuletzt genannte Methode findet insbesondere Anwendung zum Einbringen von Aluminiumoxid und/oder Kieselgel sowie gegebenenfalls verstärkend wirkenden Füllstoffen.

Sofern zu den verwendbaren Hilfsmitteln oder Zusatzstoffen nachfolgend keine näheren Angaben gemacht werden, können diese der Fachliteratur, beispielsweise der Monographie von J.H. Saunders und K.C. Frisch "High Polymers", Band XVI, Polyurethane, Teil 1 und 2 (Verlag Interscience Publishers 1962 bzw. 1964), dem Kunststoff-Handbuch, Band 7, Polyurethane 1. und 2. Auflage (Carl Hanser Verlag, 1966 bzw. 1983) oder der DE-OS 29 01 774 entnommen werden.

Zur Herstellung der TPU werden die Aufbaukomponenten (a), (b) und (c) in Gegenwart von Katalysatoren (d) und gegebenenfalls Hilfsmitteln (e) und/oder Zusatzstoffen (f) in solchen Mengen zur Reaktion gebracht, daß das Äquivalenzverhältnis von NCO-Gruppen der Diisocyanate zur Summe der Hydroxylgruppen der Komponenten (b) und (c) 0,80 bis 1,20:1, vorzugsweise 0,95 bis 1,05:1 und insbesondere ungefähr 1:1 beträgt.

Die erfindungsgemäß verwendbaren TPU, die einen Schmelzindex bei 190°C und einem Auflagegewicht von 212 N (21,6 kp) von 50 bis 350, vorzugsweise 200 bis 300 aufweisen, können hergestellt werden nach dem Extruder- oder vorzugsweise Bandverfahren durch batchweises oder kontinuierliches Mischen der Aufbaukomponenten (a) bis (d) sowie gegebenenfalls (e) und/oder (f), Ausreagierenlassen der Reaktionsmischung im Extruder oder auf einem Trägerband bei Temperaturen von 60 bis 250°C, vorzugsweise 70 bis 150°C und anschließendes Granulieren der erhaltenen TPU (A). Gegebenenfalls kann es zweckmäßig sein das erhaltene TPU vor der Weiterverarbeitung zu den erfindungsgemäßen TPU-Formmassen bei 80 bis 120°C, vorzugsweise 100 bis 110°C über einen Zeitraum von 1 bis 24 Stunden zu tempern.

Die TPU werden, wie bereits ausgeführt wurde, bevorzugt nach dem Bandverfahren hergestellt. Hierzu werden die Aufbaukomponenten (a) bis (d) und gegebenenfalls (e) und/oder (f) bei Temperaturen oberhalb des Schmelzpunktes der Aufbaukomponenten (a) bis (c) mit Hilfe eines Mischkopfes kontinuierlich gemischt. Die Reaktionsmischung wird auf einen Träger, vorzugsweise ein Förderband z.B. aus Metall, aufgebracht und mit einer Geschwindigkeit von 1 bis 20 m/Minute, vorzugsweise von 4 bis 10 m/Minute durch eine temperierte Zone von 1 bis 20 m, vorzugsweise von 3 bis 10 m Länge geführt. Die Reaktionstemperatur in der temperierten Zone beträgt 60 bis 200°C, vorzugsweise 80 bis 180°C. In Abhängigkeit vom Diisocyanatanteil in der Reaktionsmischung wird die Reaktion durch Kühlen oder Heizen so gesteuert, daß mindestens 90 %, vorzugsweise mindestens 98 % der Isocyanatgruppen der Diisocyanate umgesetzt werden und die Reaktionsmischung bei der gewählten Reaktionstemperatur erstarrt. Aufgrund der freien Isocyanatgruppen im erstarrten Reaktionsprodukt, die bezogen auf das Gesamtgewicht, im Bereich von 0,05 bis 1 Gew.%, vorzugsweise von 0,1 bis 0,5 Gew.% liegen, werden TPU mit einer relativ niedrigen Schmelzviskosität bzw. einem hohen Schmelzindex erhalten.

Wie bereits dargelegt wurde, hat es sich als vorteilhaft erwiesen, z.B. zur Modifizierung der mechanischen Eigenschaften der erhaltenen Folien oder deren Lichtbeständigkeit sowie nach Art ihrer Verwendung, anstelle von einem TPU, Mischungen aus zwei oder mehreren TPU in bestimmten, experimentell ermittelbaren Gewichtsmengen zu verwenden.

Bei der Auswahl der TPU ist zu beachten, daß die erhaltene Mischung die erfindungswesentlichen Kriterien hinsichtlich Schmelzindex und Härte erfüllen muß. Dies bedeutet, daß zur Herstellung der TPU-Mischung auch TPU Anwendung finden können, die als Einzelkomponenten die erfindungswesentlichen Auswahlkriterien nicht erfüllen und daher bei alleiniger Verwendung zur Herstellung von PU-Folien durch Sintern unbrauchbar sind.

So können beispielsweise schwarz eingefärbte Folien aus TPU's auf Basis von aromatischen Diisocyanaten, vorzugsweise 4,4'-Diphenylmethan-diisocyanat, und nahezu beliebigen Polyhydroxylverbindungen (b) und Diolen (c) hergestellt werden. TPU auf Basis aliphatischer Diisocyanate sind zwar lichtstabil, sie kristallisieren aber relativ schwer und sind nach einer thermoplastischen Verarbeitung nur schwierig handhabbar. Durch Abmischen von TPU auf Basis von aromatischen Diisocyanaten mit solchen auf der Grundlage von aliphatischen und/oder cycloaliphatischen Diisocyanaten kann beispielsweise die Lichtbeständigkeit der Folien erheblich verbessert werden, ohne daß die TPU-Mischung bei der Verarbeitung nennenswert zum Verkleben mit dem Formwerkzeug neigt. Nach dieser Methode können aus TPU aus aromatischen und aliphatischen und/oder cycloaliphatischen Diisocyanaten Folien mit für andere Farbeinstellungen ausreichender Lichtstabilität erhalten werden, die überraschenderweise im wesentlichen vollständig klebfrei sind.

In analoger Weise können durch geeignete Wahl von TPU aus unterschiedlichen Polyhydroxylverbindungen, insbesondere solchen aus Polyetherolen oder Polyesterolen, beispielsweise die mechanischen Eigenschaften der Folien, ihre Oxidations- oder Hydrolysestabilität sowie je nach Wahl des Diisocyanats, wie bereits ausgeführt wurde, die Lichtbeständigkeit gezielt modifiziert werden.

Hierfür bewährt haben sich und daher vorzugsweise Anwendung zur Herstellung der weichen, elastischen PU-Folien finden TPU-Mischungen, die bezogen auf 100 Gew.-Teile, bestehen aus
A) 40 bis 99,5 Gew.-Teilen, vorzugsweise 60 bis 85 Gew.-Teilen eines TPU (A), hergestellt unter Verwendung von aromatischen Diisocyanaten, vorzugsweise 4,4'-Diphenylmethan-diisocyanat und
B) 0,5 bis 60 Gew.-Teilen, vorzugsweise 15 bis 40 Gew.-Teilen eines TPU (B), hergestellt unter Verwendung von aliphatischen Diisocyanaten, vorzugsweise ausgewählt aus der Gruppe Hexamethylen-diisocyanat-1,6, Isophoron-diisocyanat und 4,4'-Dicyclohexylmethan-diisocyanat oder Mischungen aus mindestens zwei der genannten Diisocyanate oder
TPU-Mischungen, die bestehen, bezogen auf 100 Gew.-Teile, aus
I) 60 bis 99,5 Gew.-Teilen, vorzugsweise 70 bis 90 Gew.-Teilen eines TPU, hergestellt unter Verwendung mindestens eines Polyoxyalkylen-glykols, z.B. eines Polyoxypropylen-, Polyoxypropylenpolyoxyethylen- oder Polyoxytetramethylen-glykols und
II) 0,5 bis 40 Gew.-Teilen, vorzugsweise 10 bis 30 Gew.-Teilen eines TPU, hergestellt unter Verwendung von Polyester-diolen, vorzugsweise Polyalkylenglykolpolyadipaten mit 2 bis 6 C-Atomen im Alkylenglykolrest
sowie insbesondere TPU-Mischungen, die bestehen, bezogen auf 100 Gew.-Teilen, aus
AI) 60 bis 95 Gew.-Teilen, vorzugsweise 70 bis 90 Gew.-Teilen eines TPU, hergestellt unter Verwendung von 4,4'-Diphenylmethan-diisocyanat und eines Polyoxytetramethylen-glykols mit einem Molekulargewicht im Bereich von 500 bis 8000
und
BII) 5 bis 40 Gew.-Teilen, vorzugsweise 10 bis 30 Gew.-Teilen eines TPU, hergestellt unter Verwendung von Isophoron-diisocyanat und eines Polyester-diols, vorzugsweise eines Alkandiolpolyadipats, mit einem Molekulargewicht im Bereich von 500 bis 6000.

Die erfindungsgemäß durch Sintern zur Folienherstellung geeigneten TPU werden zweckmäßigerweise mittels geeigneter bekannter Vorrichtungen, z.B. Mühlen, zerkleinert und mit einer durchschnittlichen Korngrößenverteilung von 50 bis 800 µm, vorzugsweise von 100 bis 500 µm gesintert.

Zur Verbesserung der Rieselfähigkeit dieser TPU-Pulver sowie insbesondere zur Reduzierung der Fließfähigkeit der TPU-Schmelze an senkrechten oder überhitzten Formwerkzeugstellen werden den pulverförmigen TPU zweckmäßigerweise pulverförmiges Aluminiumoxid oder insbesondere pulverförmiges Kieselgel sowie gegebenenfalls Mischungen aus Aluminiumoxid und Kieselgel einverleibt. Bereits durch den Zusatz von 0,05 bis 1 Gew.-Teilen, vorzugsweise von 0,1 bis 0,3 Gew.-Teilen Aluminiumoxid und/oder Kieselgel, bezogen auf 100 Gew.-Teile TPU-Pulver, konnte ein Abfließen der TPU-Schmelze beim Sintern an senkrechten Formwerkzeugoberflächen oder ein Wegfließen an überhitzten Formwerkzeugstellen, verbunden mit der Ausbildung von Dünnstellen oder Löchern in der Folie, vermieden werden. Mit Hilfe dieser vorzugsweise angewandten Verfahrensvarianten können Folien mit sehr gleichmäßiger Dickenverteilung hergestellt werden.

Wie bereits dargelegt wurde können den TPU oder TPU-Pulvern zusätzlich Hilfsmittel und/oder Zusatzstoffe einverleibt werden.

Genannt seien Füllstoffe, z.B. organische Füllstoffe, wie z.B. Ruß und Melamin und anorganische Füllstoffe, wie z.B. Quarzmehl, Talkum, amorphe Kieselsäure oder Mischungen davon.

Als Flammschutzmittel haben sich z.B. bewährt: Melamin, Polyhalogendiphenyle, Polyhalogendiphenylether, Polyhalogenphthalsäure und ihre Derivate, Polyhalogenoligo- und -polycarbonate, wobei die entsprechenden Bromverbindungen besonders wirksam sind. Als Flammschutzmittel eignen sich ferner Phosphorverbindungen, wie elementarer Phosphor oder organische Phosphorverbindungen. Außerdem enthalten die Flammschutzmittel in der Regel zusätzlich einen Synergisten, z.B. Antimontrioxid.

Geeignete Oxidationsverzögerer und Wärmestabilisatoren sind beispielsweise Halogenide von Metallen der Gruppe I des periodischen Systems, z.B. Natrium-, Kalium-, Lithium-Halogenide, gegebenenfalls in Verbindung mit Kupfer-(I)-Halogeniden, z.B. Chloriden, Bromiden oder Iodiden, sterisch gehinderte Phenole, Hydrochinone, sowie substituierte Verbindungen dieser Gruppen und Mischungen davon, die vorzugsweise in Konzentrationen bis zu 1 Gew.% bezogen auf das Gewicht des TPU verwendet werden.

Beispiele für UV-Stabilisatoren sind verschiedene substituierte Resorcine, Salicylate, Benzotriazole und Benzophenone sowie sterisch gehinderte Amine, die im allgemeinen in Mengen bis zu 2,0 Gew.%, bezogen auf das Gewicht des TPU, eingesetzt werden.

Entformungsmittel, die in der Regel ebenfalls in Mengen bis zu 1 Gew.%, bezogen auf das Gewicht des TPU zugesetzt werden, sind Stearinsäuren, Stearylalkohol, Stearinsäureester und -amide sowie die Fettsäureester des Pentaerythrits.

Ferner können organische Farbstoffe, wie Nigrosin, Pigmente, z.B. Titandioxid, Cadmiumsulfid, Cadmiumsulfidselenid, Phthalocyanine, Ultramarinblau oder Ruß zugesetzt werden.

Zur Herstellung der weichen, elastischen PU-Folien wird das Formwerkzeug, vorzugsweise ein Galvanowerkzeug, in einer geeigneten Vorrichtung, z.B. einem Ofen, auf eine Temperatur von 220 bis 280°C, vorzugsweise von 230 bis 270°C erhitzt. Danach wird das pulverförmige TPU mit einer durchschnittlichen Korngröße von 50 bis 800 µm, vorzugsweise in Gegenwart von Aluminiumoxid und/oder Kieselgel in einer hinsichtlich der gewünschten Foliendicke ausreichenden Menge auf die Formwerkzeugoberfläche aufgebracht und nach kurzem Kontakt, z.B. nach einer Kontaktzeit von 10 bis 30, vorzugsweise von 16 bis 25 Sekunden das überschüssige TPU-Pulver abgeschüttet. Die am Formwerkzeug anhaftende TPU-Pulverschicht läßt man mittels der Wärmekapazität des Formwerkzeugs oder durch erneute Erwärmung, z.B. durch Beheizung in einem Ofen oder durch Bestrahlung, bei einer Temperatur im vorgenannten Bereich ausgelieren. Nach dem Abkühlen des Formwerkzeugs, z.B. an der Luft, in einem gegebenenfalls gekühlten Inertgas und/oder Luftstrom oder in einem Wasserbad, kann die gebildete Folie vom Formwerkzeug abgetrennt, zwischengelagert oder direkt der Hinterschäumung, vorzugsweise mit PU-Schaumstoff zugeführt werden.

Die erfindungsgemäß hergestellten PU-Folien sind weich und elastisch, besitzen eine Dicke von 0,3 bis 3 mm, entsprechend einem Flächengewicht von 360 bis 3600 g/m² und zeichnen sich durch sehr gute mechanische Eigenschaften, insbesondere eine hohe Reißfestigkeit sowie durch einen trockenen Griff und eine fast völlige Geruchslosigkeit aus.

Da eine Wechselwirkung zwischen PU-Folie und PU-Schaumstoff nicht eintritt, eignen sich die Folien insbesondere zur Hinterschäumung mit weichelastischen, halbharten oder vorzugsweise harten PU-Schaumstoffen. Derartige mit erfindungsgemäßen PU-Folien beschichtete Formteile, wie z.B. Instrumententafeln, Säulen- oder Türverkleidungen, Sonnenblenden, Handschuhkasten, Konsolen, Ablagen, Formhimmel, finden Verwendung im Innenraum von Verkehrsmitteln, vorzugsweise von Kraftfahrzeugen.

### Beispiel 1

### Herstellung einer beigefarbenen PU-Folie

Eine bei Raumtemperatur hergestellte Mischung, bestehend aus
78 Gew.-Teilen eines TPU mit einer Shore-A-Härte von 90 und einem Schmelzindex bei 190°C und einem Auflagegewicht von 212 N von 280, hergestellt durch Umsetzung von 1 Mol Polyoxytetramethylen-glykol mit einem Molekulargewicht von 1000, 4 Molen 4,4'-Diphenylmethan-diisocyanat und 3 Molen Butandiol-1,4 nach dem Bandverfahren,
18 Gew.-Teilen eines TPU mit einer Shore-A-Härte von 85 und einem Schmelzindex bei 190°C und einem Auflagegewicht von 212 N von 180, hergestellt durch Umsetzung von 1 Mol Butandiol-1,4-polyadipat mit einem Molekulargewicht von 2000, 3 Molen Isophoron-diisocyanat und 2 Molen Butandiol-1,4 nach dem Bandverfahren,
0,75 Gew.-Teile Titandioxid,
3,0 Gew.-Teilen Sicotangelb®K 2011,
0,18 Gew.-Teilen Eisen(II)oxid,
0,3 Gew.-Teilen Tinuvin®144 als UV-Stabilisator und
0,3 Gew.-Teilen Irganox®1010 als Oxidationsstabilisator
wurde bei 210°C in einem Zweiwellenextruder unter solchen Verfahrensbedingungen zusammengeschmolzen, daß das erhaltene Granulat eine Shore-A-Härte von 88 und einem Schmelzindex bei 190°C und einem Auflagegewicht von 212 N von 310 besaß.

Das erhaltene TPU-Granulat wurde mit Hilfe einer Pralltellermühle auf eine durchschnittliche Korngröße zwischen 100 und 500 µm vermahlen und 100 Gew.-Teile davon mit 0,15 Gew.-% eines feinteiligen Kieselgels homogen gemischt.

Die homogene TPU-Kieselgel-Mischung wurde in an sich bekannter Weise auf eine auf 250°C temperiertes Formwerkzeug aufgebracht, nach einer Kontaktzeit von 20 Sekunden das überschüssige TPU-Pulver abgeschüttet und danach das auf dem Formwerkzeug verbliebene TPU in 2 Minuten bei 250°C gesintert. Nach dem Abkühlen des Formwerkzeugs in einem Wasserbad wurde die PU-Folie entnommen.

Die erhaltene PU-Folie mit einer Dicke von 0,6 mm war weich und elastisch und wies keinerlei Fehlstellen oder Lunker auf.

### Beispiel 2

Eine bei Raumtemperatur hergestellte Mischung, bestehend aus
72 Gew.-Teilen eines TPU mit einer Shore-A-Härte von 85 und einem Schmelzindex bei 190°C und einem Auflagegewicht von 212 N von 230, hergestellt durch Umsetzung von 1 Mol Polyoxytetramethylen-glykol mit einem Molekulargewicht von 1000, 3,5 Molen 4,4'-Diphenylmethan-diisocyanat und 2,5 Molen Butandiol-1,4 nach dem Bandverfahren,
24 Gew.-Teilen eines TPU mit einer Shore-A-Härte von 85 und einem Schmelzindex bei 190°C und einem Auflagegewicht von 212 N von 180, hergestellt durch Umsetzung von 1 Mol Butandiol-1,4-polyadipat mit einem Molekulargewicht von 2000, 3 Molen Isophoron-diisocyanat und 2 Molen Butandiol-1,4 und dem Bandverfahren,
0,65 Gew.-Teilen Ultramarinblau,
0,24 Gew.-Teilen Lichtgelb,
0,12 Gew.-Teilen Heliogengrün®,
0,20 Gew.-Teilen Ruß,
0,40 Gew.-Teilen Titandioxid,
0,79 Gew.-Teilen Kreide (Microcalcilin®,)
0,8 Gew.-Teilen Irganox®1010 als Oxidationsstabilisator und
0,8 Gew.-Teilen Tinuvin®328 als UV-Stabilisator
wurde bei 212°C in einem Zweiwellenextruder vom Typ ZSK zusammengeschmolzen. Das erhaltene Granulat hatte eine Shore-A-Härte von 85 und einen Schmelzindex bei 190°C und einem Auflagegewicht von 212 N von 220.

Das Pulver daraus wurde auf einer Stiftmühle unter Zugabe von flüssigem Stickstoff hergestellt und hatte eine durchschnittliche Korngröße von 100 bis 500 µm. Für die Verarbeitung wurde dem Pulver 0,1 Gew.-% eines feinteiligen Kieselgels homogen zugemischt.

Die Pulvermischung wurde analog den Angaben des Beispiels 1, jedoch bei einer Werkzeugtemperatur von 240°C zu einer Folie mit einer Wandstärke von 0,8 mm verarbeitet.

### Beispiel 3

Eine bei Raumtemperatur hergestellte Mischung, bestehend aus
98 Gew.-Teilen eines TPU mit einer Shore-A-Härte von 90 und einem Schmelzindex bei 190°C und einem Auflagegewicht von 212 N von 280, hergestellt durch Umsetzung von 1 Mol Polyoxytetramethylen-glykol mit einem Molekulargewicht von 1000, 4 Molen 4,4'-Diphenylmethan-diisocyanat und 3 Molen Butandiol-1,4 nach dem Bandverfahren,
1,0 Gew.-Teilen Spezial-Schwarz 4,
0,1 Gew.-Teilen Eisen(II)oxid (Bayerferrox),
0,5 Gew.-Teilen Irganox®1010 undund
0,4 Gew.-Teilen Tinuvin®328
wurde bei 220°C in einem Zweiwellenextruder zusammengeschmolzen. Das erhaltene Granulat hatte eine Shore-A-Härte von 91 und einen Schmelzindex bei 190°C und einem Auflagegewicht von 212 N von 245.

Aus dem Granulat wurde in der in Beispiel 1 beschriebenen Weise ein Pulver mit einer durchschnittlichen Korngröße zwischen 100 und 500 µm hergestellt. Dem Pulver wurden 0,12 Gew.-% eines feinteiligen Kieselgels zugegeben. Mit einer Werkzeugtemperatur von 270°C und einer Kontaktzeit von 15 Sekunden wurde eine PU-Folie mit einer Dicke von 0,6 mm hergestellt. Die Oberfläche der Folie war einwandfrei und zeigte keinerlei Fehlstellen.

## Patentansprüche

1. Verfahren zur Herstellung von weichen, elastischen Polyurethan-Folien, dadurch gekennzeichnet, daß man ein pulverförmiges thermoplastisches Polyurethan oder thermoplastisches Polyurethan-Gemisch mit einem Schmelzindex bei 190°C und einem Auflagegewicht von 212 N (21,6 kp) von 50 bis 350 sowie einer Shore-A-Härte von 80 bis 98 mittels eines temperierten Formwerkzeuges sintert.

2. Verfahren nach Anspruch 1, dadurch gekennzeichnet, daß die Sinterung bei einer Formwerkzeugtemperatur von 220 bis 280°C durchgeführt wird.

3. Verfahren nach einem der Ansprüche 1 oder 2, dadurch gekennzeichnet, daß die thermoplastischen Polyurethane als Pulver mit einer durchschnittlichen Korngröße von 50 bis 800 µm eingesetzt werden.

4. Verfahren nach einem der Ansprüche 1 bis 3, dadurch gekennzeichnet, daß das Sintern in Gegenwart von 0,05 bis 1 Gew.-Teilen Aluminiumoxid und/oder Kieselgel pro 100 Gew.-Teile thermoplastisches Polyurethan durchgeführt wird.

5. Verfahren nach einem der Ansprüche 1 bis 4, dadurch gekennzeichnet, daß ein thermoplastisches Polyurethan-Gemisch verwendet wird, das bezogen auf 100 Gew.-Teile, besteht aus
A) 40 bis 99,5 Gew.-Teilen eines thermoplastischen Polyurethans (A), hergestellt unter Verwendung von aromatischen Diisocyanaten, vorzugsweise 4,4'-Diphenylmethan-diisocyanat, und
B) 0,5 bis 60 Gew.-Teilen eines thermoplastischen Polyurethans (B), hergestellt unter Verwendung von aliphatischen Diisocyanaten, vorzugsweise aus der Gruppe Hexamethylen-diisocyanat-1,6, Isophoron-diisocyanat und/oder 4,4'-Dicyclohexylmethan-diisocyanat.

6. Verfahren nach einem der Ansprüche 1 bis 5, dadurch gekennzeichnet, daß ein thermoplastisches Polyurethan-Gemisch verwendet wird, das besteht, bezogen auf 100 Gew.-Teile, aus
I) 60 bis 99,5 Gew.-Teilen eines thermoplastischen Polyurethans (I), hergestellt unter Verwendung von Polyoxyalkylen-glykolen und
II) 0,5 bis 40 Gew.-Teilen eines thermoplastischen Polyurethans (II), hergestellt unter Verwendung von Polyesterdiolen.

7. Verfahren nach einem der Ansprüche 1 bis 6, dadurch gekennzeichnet, daß man ein thermoplastisches Polyurethan-Gemisch verwendet, das besteht, bezogen auf 100 Gew.-Teile, aus
AI) 60 bis 95 Gew.-Teilen eines thermoplastischen Polyurethans, hergestellt unter Verwendung von 4,4'-Diphenylmethan-diisocyanat und eines Polyoxytetramethylen-glykols mit einem Molekulargewicht von 500 bis 8000 und
BII) 5 bis 40 Gew.-Teilen eines thermoplastischen Polyurethans, hergestellt unter Verwendung von Isophoron-diisocyanat und eines Polyesterdiols, vorzugsweise eines Alkandiol-polyadipats, mit einem Molekulargewicht von 500 bis 6000.

8. Verwendung der weichen, elastischen Polyurethan-Folien, hergestellt nach einem der Ansprüche 1 bis 7, zum Beschichten von Formteilen für den Innenraum von Verkehrsmitteln, vorzugsweise Kraftfahrzeugen.

## Claims

1. A process for the production of soft, elastic polyurethane films, which comprises sintering a pulverulent thermoplastic polyurethane or thermoplastic polyurethane mixture having a melt flow index of from 50 to 350 at 190°C/212 N (21.6 kp) and a Shore A hardness of from 80 to 98 by means of a heated mould.

2. A process as claimed in claim 1, wherein the sintering is carried at a mould temperature of from 220 to 280°C.

3. A process as claimed in claim 1 or 2, wherein the thermoplastic polyurethanes are employed as powders having a mean particle size of from 50 to 800 µm.

4. A process as claimed in any of claims 1 to 3, wherein the sintering is carried out in the presence of from 0.05 to 1 part by weight of aluminum oxide and/or silica gel per 100 parts by weight of thermoplastic polyurethane.

5. A process as claimed in any of claims 1 to 4, wherein a thermoplastic polyurethane mixture is used which comprises, based on 100 parts by weight,
A) from 40 to 99.5 parts by weight of a thermoplastic polyurethane (A), prepared using aromatic diisocyanates, preferably 4,4'-diphenylmethane diisocyanate, and
B) from 0.5 to 60 parts by weight of a thermoplastic polyurethane (B), prepared using aliphatic diisocyanates, preferably from the group consisting of hexamethylene 1,6-diisocyanate, isophorone diisocyanate and/or 4,4'-dicyclohexylmethane diisocyanate.

6. A process as claimed in any one of claims 1 to 5, wherein a thermoplastic polyurethane mixture is used which comprises, based on 100 parts by weight,
I) from 60 to 99.5 parts by weight of a thermoplastic polyurethane (I) prepared using polyoxyalkylene glycols, and
II) from 0.5 to 40 parts by weight of a thermoplastic polyurethane (II) prepared using polyester-diols.

7. A process as claimed in any of claims 1 to 6, wherein a thermoplastic polyurethane mixture is used which comprises, based on 100 parts by weight,
AI) from 60 to 95 parts by weight of a thermoplastic polyurethane prepared using 4,4'-diphenylmethane diisocyanate and a polyoxytetramethylene glycol having a molecular weight of from 500 to 8000, and
BII) from 5 to 40 parts by weight of a thermoplastic polyurethane prepared using isophorone diisocyanate and a polyester-diol, preferably an alkanediol polyadipate, having a molecular weight of from 500 to 6000.

8. The use of soft, elastic polyurethane films produced as claimed in any of claims 1 to 7 for coating mouldings for the interior of transportation means, preferably motor vehicles.

## Revendications

1. Procédé de fabrication de feuilles de polyuréthanne souples élastiques, caractérisé par le fait qu'on fritte au moyen d'un moule porté à une certaine température un polyuréthanne thermoplastique ou un mélange thermoplastique de polyuréthannes pulvérulent ayant un indice de fusion, à 190°C, et un poids appliqué de 212 N (21,6 kgf), de 50 à 350 et une dureté Shore A de 80 à 98.

2. Procédé selon la revendication 1, caractérisé par le fait qu'on effectue le frittage avec une température du moule de 220 à 280°C.

3. Procédé selon l'une des revendications 1 et 2, caractérisé par le fait qu'on emploie les polyuréthannes thermoplastiques sous forme de poudre ayant une grosseur moyenne de grain de 50 à 800 µm.

4. Procédé selon l'une des revendications 1 à 3, caractérisé par le fait qu'on effectue le frittage en présence de 0,05 à 1 partie en poids d'oxyde d'aluminium et/ou de gel de silice pour 100 parties en poids de polyuréthanne thermoplastique.

5. Procédé selon l'une des revendications 1 à 4, caractérisé par le fait qu'on utilise un mélange thermoplastique de polyuréthannes constitué, pour 100 parties en poids, de
A) 40 à 99,5 parties en poids d'un polyuréthanne thermoplastique (A) élaboré avec des diisocyanates aromatiques, de préférence avec le diphényl-4,4' méthane diisocyanate, et
B) 0,5 à 60 parties en poids d'un polyuréthanne thermoplastique (B) élaboré avec des diisocyanates aliphatiques, de préférence du groupe hexaméthylène-diisocyanate-1,6, isophorone-diisocyanate et/ou dicyclohexyl-4,4' méthane diisocyanate.

6. Procédé selon l'une des revendications 1 à 5, caractérisé par le fait q'uon utilise un mélange thermoplastique de polyuréthannes constitué, pour 100 parties en poids, de
I) 60 à 99,5 parties en poids d'un polyuréthanne thermoplastique (I) élaboré avec des polyoxyalcèneglycols et
II) 0,5 à 40 parties en poids d'un polyuréthanne thermoplastique (II) élaboré avec des polyesterdiols.

7. Procédé selon l'une des revendications 1 à 6, caractérisé par le fait qu'on utilise un mélange thermoplastique de polyuréthannes constitué, pour 100 parties en poids, de
AI) 60 à 95 parties en poids d'un polyuréthanne thermoplastique élaboré avec le 4,4'-diphénylméthane-diisocyanate et un polyoxytétraméthylèneglycol ayant une masse moléculaire de 500 à 8000 et
BII) 5 à 40 parties en poids d'un polyuréthanne thermoplastique élaboré avec l'isophorone-diisocyanate et un polyesterdiol, de préférence un polyadipate d'alcandiol, d'une masse moléculaire de 500 à 6000.

8. Utilisation des feuilles de polyuréthanne souples élastiques fabriquées selon l'une des revendications 1 à 7 pour le revêtement d'éléments façonnés pour l'intérieur de moyens de transport, principalement de véhicules automobiles.
